# NEW EUROPEAN PATENT SPECIFICATION

(11) **EP 0 237 505 B2**
(45) Date of publication and mention of the opposition decision: **06.05.1998**
(45) Mention of the grant of the patent: 21.08.1991
(21) Application number: 87850047.9
(22) Date of filing: 11.02.1987
(51) Int. Cl.: A61C 8/00

(54) **Anchoring member for permanent anchorage in bone tissue**
Element zum Verankern im Knochengewebe
Elément destiné à l'ancrage permanent dans les tissus osseux

(30) Priority: 12.02.1986 SE 8600611
(43) Date of publication of application: 16.09.1987
(73) Proprietor: The Institute for Applied Biotechnology, S-400 33 Göteborg (SE)
(72) Inventor: Jörnéus, Lars, S-415 16 Göteborg (SE); Hagberg, Kjell Olof, S-414 57 Gothenburg (SE); Lööf, Lennart, S-414 57 Göteborg (SE); Jörgensen, Einar, S-452 32 Hisingskärra (SE); Branemark, Per-Ingvar, S-431 39 Mölndal (SE); Morenius, Carl Arne, S-431 43 Mölndal (SE)
(74) Representative: Karlsson, Leif Karl Gunnar

(56) References cited:
- EP-A- 139 052
- EP-A- 0 111 134
- DE-C- 3 043 336
- DE-U- 8 523 007
- GB-A- 1 291 470
- SE-B- 331 451
- US-A- 3 732 621
- Branemark, P.I. and others: OSSEOINTEGRATED IMPLANTS in the Treatment of the Edentulous Jaw Experience from a 10-year period, Almqvist & Wiksell International, Stockholm, 1977
- Tetsch, Peter: Enossale Implantationen in der Zahnheilkunde, Carl Hanser Verlag, München, Wien, 1984
- Orale Implantologie, Vol. 3, Nr. 4, 1976, published by Deutsche Gesellschaft für zahnärztliche Implantologie e. V.
- Leonard L. Linkow, Raphael Cherchève: Theories and techniques of oral implantology, The C. V. Mosby Company, Saint Louis, 1970

## Description

The present invention relates to a screw-shaped anchoring member made of titanium for permanent anchorage in bone tissue, specifically permanent anchorage of artificial teeth and tooth bridges in the jaw bone.

The anchoring member comprises at least one cavity which is directly communicating with openings in the outer cylindrical surface of the anchoring member to allow newly formed bone tissue to grow into the cavity. The edges of the cavities on the outer cylindrical surface are forming cutting edges to provide self-tapping when the anchoring member is screwed into the bone tissue.

It is previously known to permanently anchor oral and extraoral prostheses in bone tissue. In order to avoid loosening of the prosthesis a healing period is required during which period there is a direct contact, i.e. an exact adaption, between the prosthesis and the bone tissue. Such a permanent, exact adaption which allows loading is called osseointegration. That such a long-term adaption and function in clinical praxis of load-supporting artificial anchoring members is possible was first indicated by Dr. Brånemark et al. They showed that screwshaped anchoring members, so-called fixtures, of pure titanium were osseointegrated if a number of pre-reguisites were fulfilled. The osseointegration principle developed by professor Brånemark et al has been used in clinical praxis for 20 years with good results and has been described for instance in
Brånemark/Zarb/Albrektsson : "Tissue-Integrated Prostheses, Quintessence Books, 1985.

The osseointegration principle is based not only on an implant made of pure titanium but also on a specific operating technique with installation of the titanium fixture in a first operation with a minimum of surgical trauma, a healing period for a specific period of time and without any direct load on the fixture and a second operation at which the prosthesis part (abutment) is attached to the fixture, i.e. a two-part operation with an intermediate unloaded healing period.

In order to achieve a good healing of the fixture within the bone tissue a minimum of negative biological reactions should be induced, or even better, most positive reactions only. The structure and the chemical composition of the fixture surface has been of a significant importance for these reactions.

In Swedish patent 7902035-0 there is illustrated how improved results can be achieved by a specific surface structure of the fixture titanium material. The surface layer of the fixture comprises a micro-pitted titanium dioxide in which the surface pits have a diameter of 10-1000 nm. preferably 10-300 nm.

In addition to a specific surface structure and a specific chemical composition it is important that the fixture has an adequate geometrical design in order to facilitate the requirement of an atraumatic surgical operation as well as a surface cleanliness. GB-A- 1 291 470 describes a bolt-shaped anchoring member with an external thread. The threaded part of the bolt is intended to be inserted into a hole drilled in the jaw bone and which is provided with an internal thread for a permanent implantation of a dental anchoring member. The bolt is provided with a bore which is open at the bottom and provided with radially directed openings through the threads into the bore. The bolt also has a conical bottom end part. Said openings at the bottom end part of the bolt are intended to facilitate the healing of the bolt into the jaw bone because of ingrowth of newly formed bone tissue through the openings to prevent the bolt from being screwed out.

As already mentioned the bolt is intended to be inserted into a hole drilled in the jaw bone. To satisfy the requirement of an atraumatic surgical operation technique the preparation of the bone hole is made in several steps using drills with successively increasing drilling diameters as well as a series of screw taps. In order to achieve an atraumatic preparation of the fixture site it is required that the temperature is maintained low, which involves low drilling speeds and adequate cooling by means of profuse irrigation with saline solution. The surface of the fixture must be very clean which requires a careful cleaning after every operation step or the use of non-returnable instruments.

In order to facilitate the surgical method and decrease the number of instruments required for preparation of the bone tissue it is previously known to provide the fixture with cutting edges for self-tapping when the fixture is installed in the bone tissue. In addition to said bone in-growth openings a further machining of the end part of the fixture is therefore required in order to form said cutting edges. Examples of such self-tapping fixtures can be found in EP 139 052 and DE 30 43 336.

The above-mentioned openings and cutting edges implies a complicated and expensive manufacturing method, often with burrs which are difficult to remove on inner surfaces. The cutting edges which have been extended to the bottom end surface of the fixture could also damage the bone membrane during the operation.

DE-U- 85 23 007 relates to a screw-shaped anchoring member which is also self-tapping and in which the cutting edges are not extended quite to the bottom end surface of the fixture. However, the self-tapping properties as well as the possibilites for ingrowth of newly formed bone tissue are very limited by means of this single and shallow cutting edge.

The object of the present invention is therefore to provide an anchoring member which fulfills the requirements of an efficient bone-ingrowth and self-tapping properties and which also facilitates the manufacturing of the element. The anchoring member should also be designed in such a way that the risk of damaging the bone membrane during the surgical operation is reduced. According to the invention this is achieved by the characterizing features of claim 1.

The anchoring member described in GB-A- 1 291 470 is also provided with a cavity, well 11, in which loose skeletial tissue material scraped off while the bolt is screwed into the cavity can be collected. Said well, however, is not adapted to accomodate the volume of such scraped-off bone material. This well 11 communicates not only with the cylindrical surface of the bolt, but is also open downwardly so that the scraped-off bone material can fall down onto the bottom of the bone hole and disturb the osseointegration of the base of the anchoring member.

In the following the invention will be described more in detail in connection with the accompanying drawings which illustrate some different embodiments of anchoring members according to the invention. Figures 1 and 2 show a longitudinal section and a transverse section through the end part of an anchoring member in which the bone tissue material volume is formed by two through, perpendicular holes made in the cylindrical surface and figures 3 and 4 the corresponding sections for an anchoring member with three separate comparatively deep, but not through, bone tissue material volumes symmetrically arranged on the cylindrical surface of the anchoring member.

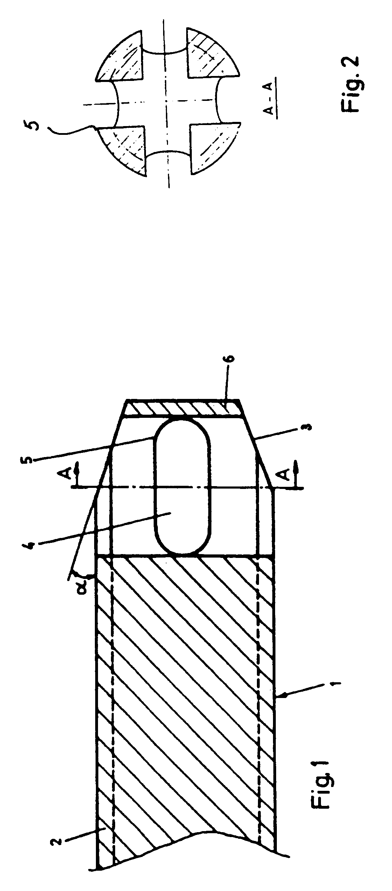

As illustrated in figure 1 the anchoring member, the so-called fixture, comprises a rigid, cylindrical screw 1 with an external thread 2. The screw is intended to be inserted in a bored hole in the jaw bone for permanent anchoring of artificial teeth and tooth-bridges. The neck portion of the screw is therefore intended to be attached with a distance element, coupling elements or the like. These elements take no part of this invention, however, and are therefore not described in any detail here. The anchoring member is made of commercially pure titanium with a surface structure preferably according to the above-mentioned Swedish patent specification 7902035-0.

The fixture has a conical, downwardly tapered part 3 to facilitate the insertion of the screw into the bored hole in the bone tissue. The cone angle is in this case approximately 20°. The base part of the screw is provided with one or more openings 4 on the cylindrical surface of the screw.

The edges 5 of the openings on the cylindrical surface are forming sharp cutting edges having a positive cutting angle so that the screw is self-tapping when anchored in the bone tissue. The openings form such a cavity that the scraped-off bone tissue material is accomodate within the cavity. The cavity is closed apart from the openings on the cylindrical surface of the screw which means that all scraped-off bone tissue material is collected within the cavity and is stored there. The fixture has a plane, unbroken circular bottom surface 6 without any openings. The collected bone tissue material promotes newly formed bone tissue to grow into the holes and further prevents any tendencies of screwing out of the screw after insertion.

The bone volume cavity is formed by two perpendicular bore holes made in the cylindrical surface of the screw and which are also perpendicular to the longitudinal axis of the screw. The volume is then defined by the number of bore holes and the sectional area of each hole. In the illustrated embodiment each hole has a longitudinal section with two straight edges parallel to the longitudinal axis of the screw. It should be understood, however, that the holes also can be somewhat angled with respect to the longitudinal axis of the fixture screw. A common feature for the hole configurations, however, is that the total volume of the cavity is such that the scraped-off bone tissue material is roomed within the cavity and stored there for the respective length of the fixture and also that both the cavity and the cutting edges are formed by one or more holes made in the cylindrical surface of the fixture.

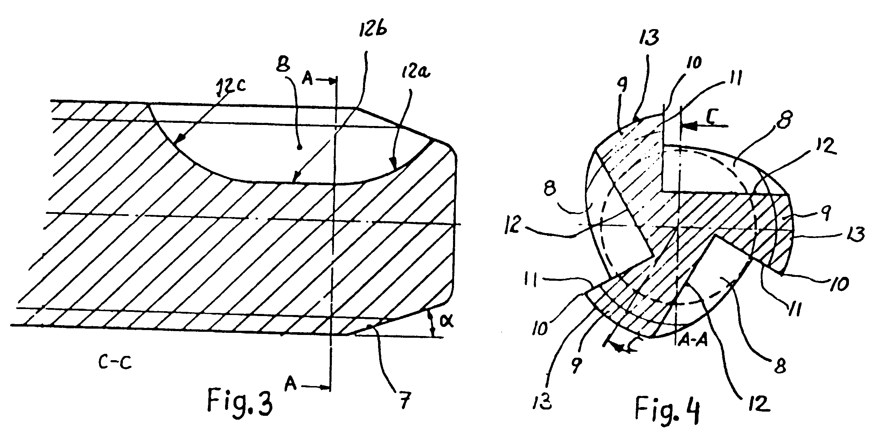

In figures 3 and 4 is illustrated a further embodiment of a self-tapping fixture according to the invention. Also this fixture has a conical, downwardly tapered base part 7 with a cone angle of approximately 20° to facilitate guiding of the fixture during the surgical procedure. The fixture also has an unbroken, plane bottom surface to avoid unintentional penetration of the bone membrane. In this case the fixture is provided with three separate cavities or bone volumes 8 which are symmetrically distributed about periphery of the fixture but not going through the fixture. Said cavities are formed by means of an outer machining with only a small formation of burrs which means a more efficient manufacturing method than the method of boring through holes, which is complicated and expensive with burrs which are difficult to remove on inner surfaces.

Also in this case the total bone volume of the cavity in the fixture is adapted to the fixture length so that all scraped-off bone tissue material can be housed in the cavity. Each bone cavity is therefore much deeper than normal in other anchoring members. In the example illustrated in figures 3 and 4 the deep of the bone volume cavity in the radial direction is approximately 50-80% of the radius of the fixture. The separate bone cavities each has an extension in the longitudinal direction which depends on the length of the fixture. Each cavity is partially extended into the conical part 7 of the fixture, but not into the plane bottom surface.

Figure 4 is a sectional view of the fixture taken just above the conical tapered part. The section shows the form of each of the bone cavities 8 and the intermediate cutting teeth 9 with cutting edges 10. Each bone cavity 8 is formed by a plane cutting surface 11 in which the cutting edge 10 has been moved over the center to provide positive cutting edges, and a concave clearance surface 12 which surface 11 is perpendicular. The clearance surface 12 includes a lower curved part 12a, a straight part 12b and an upper curved part 12c, see figure 3. Each cutting tooth 9 includes one cutting surface with a straight sharp cutting edge 10, a part 13 of the outer cylindrical surface of the fixture and the clearance surface 12. Three separate bone cavities with their intermediate three cutting edges 10 provide a good balance of the fixture when screwed into the bone tissue. The invention is not limited, however, just to three such bone cavities.

## Claims

1. Screw-shaped titanium anchoring member for permanent anchorage by osseo-integration in bone tissue,
a. the member being adapted for permanent anchorage of artificial teeth or tooth bridges in the jaw-bone,
b. comprising a cylindrical screw (1)
c. having an outer cylindrical surface with a conical downwardly tapered tip portion and a bottom surface
d. and at least two cavities (4, 8) directly communicating with at least two openings in the outer cylindrical and conical surface of the anchoring member so as to allow newly formed bone-tissue to grow into said cavities,
e. said openings being symmetrically distributed about the periphery of the anchoring member,
f. the edges (5, 10) formed by said cavities and the outer cylindrical surface forming cutting edges to provide self-tapping when the anchoring member is screwed into the bone tissue,
g. said cavities (4, 8) being formed by through-holes (4) or volumes (8) made in the cylindrical surface and partially extending into the conical portion of the anchoring member,
h. **characterized** in that said through-holes (4) or the comparatively deep bone material volumes (8), apart from said openings on the outer cylindrical and conical surface of the anchoring member, are closed,
i. said openings have a longitudinal section with two straight edges,
j. that the total volume of the cavities is adapted to the length of the anchoring member so that all the scraped-off bone material produced by self-tapping over the length of the anchoring member when the anchoring member is inserted in the jaw-bone is collected and housed within the anchoring member
k. and that the bottom surface (6) of the anchoring member is unbroken without openings.

2. Anchoring member according to claim 1 characterized in that said cavities (4) are formed by two relatively perpendicular through holes which are perpendicular to the longitudinal axis (7) of the anchoring member.

3. Anchoring member according to claim 2 characterized in that the holes have a longitudinal section defined by two straight parallel edges (5) in the longitudinal direction which edges could form an angle with the longitudinal axis (7) of the anchoring member but which are preferably parallel to said longitudinal axis (7).

4. Anchoring member according to claim 1 characterized in that each of the bone material volumes (8) is formed by a plane cutting surface (11) having a positive cutting angle and a concave clearance surface (12) perpendicular to said cutting surface (11).

5. Anchoring member according to claim 4 characterized in that said cavities comprise three such symmetrically distributed bone material volumes (8).

6. Anchoring member according to claim 5 characterized in that the deep of the bone material volumes (8) in the radial direction is approximately 50-80% of the radius of the anchoring member.

## Patentansprüche

1. Schraubenförmiges Verankerungselement aus Titan zur permanenten Verankerung durch Osseo-Integration in Knochengewebe,
a) wobei das Element zur permanenten Verankerung von künstlichen Zähnen oder Zahnbrücken im Kieferknochen angepaßt ist,
b) bestehend aus einer zylindrischen Schraube (1)
c) mit einer zylindrischen Außenfläche mit nach unten konisch verjüngtem Endabschnitt und einer Bodenfläche,
d) und mindestens zwei Hohlräumen (4, 8), die direkt mit mindestens zwei Öffnungen in der zylindrischen und konischen Außenfläche des Verankerungselementes kommunizieren, so daß neu gebildetes Knochengewebe in die Hohlräume einwachsen kann,
e) wobei die Hohlräume symmetrisch um den Umfang des Verankerungselements verteilt sind,
f) wobei die von den Hohlräumen und der zylindrischen Außenfläche gebildeten Kanten (5, 10) Schneidkanten bilden, um ein Selbstschneiden beim Einschrauben des Verankerungselementes in das Knochengewebe zu bewirken,
g) wobei die Hohlräume (4, 8) gebildet sind von durchgehenden Löchern (4) oder von Aufnahmeräumen (8), die in der zylindrischen Außenfläche ausgebildet sind und sich teilweise in den konischen Bereich des Verankerungselementes erstrecken,
h) dadurch **gekennzeichnet,** daß die durchgehenden Löcher (4) oder die verhältnismäßig tiefen Aufnahmeräume (8) für Knochenmaterial, abgesehen von den Öffnungen in der zylindrischen und konischen Außenfläche des Verankerungselementes, geschlossen sind,
i) wobei die Öffnungen einen Längsschnitt mit zwei geraden Kanten aufweisen,
j) daß das Gesamtvolumen der Hohlräume derart an die Länge des Verankerungselementes angepaßt ist, daß sämtliches abgeschabtes Knochenmaterial, das beim Einsetzen des Verankerungselementes in den Kieferknochen durch Gewindeschneiden über die Länge des Verankerungselementes erzeugt wird, innerhalb des Verankerungselementes gesammelt und aufgenommen wird,
k) und daß die Bodenfläche (6) des Verankerungselementes ohne Öffnungen durchgehend ist.

2. Verankerungselement nach Anspruch 1, dadurch **gekennzeichnet,** daß die Hohlräume (4) durch zwei zueinander senkrechte, durchgehende Löcher gebildet sind, die senkrecht zur Längsachse (7) des Verankerungselementes sind.

3. Verankerungselement nach Anspruch 2, dadurch **gekennzeichnet,** daß die Löcher einen Längsschnitt aufweisen, der durch zwei gerade, parallele Kanten (5) in Längsrichtung festgelegt ist, wobei die Kanten mit der Längsachse (7) des Verankerungselements einen Winkel bilden können, aber vorzugsweise parallel zur Längsachse (7) sind.

4. Verankerungselement nach Anspruch 1, dadurch **gekennzeichnet,** daß jeder der Aufnahmeräume (8) für Knochenmaterial gebildet wird durch eine gerade Schneidfläche (11) mit positivem Schneidwinkel und eine zur Schneidfläche (11) senkrechte konkave Freifläche (12).

5. Verankerungselement nach Anspruch 4, dadurch **gekennzeichnet,** daß die Hohlräume drei symmetrisch verteilte Aufnahmeräume (8) für Knochenmaterial umfassen.

6. Verankerungselement nach Anspruch 5, dadurch **gekennzeichnet,** daß die Tiefe der Aufnahmeräume (8) für Knochenmaterial in Radialrichtung ungefähr 50 bis 80 % des Radius des Verankerungselementes beträgt.

## Revendications

1. Elément d'ancrage de titane, en forme de vis, destiné à ancrer à demeure dans un tissu osseux par osséointégration,
a) l'élément étant destiné à assurer un ancrage permanent de dents artificielles ou de bridges dentaires dans l'os maxillaire,
b) comprenant une vis cylindrique (1)
c) ayant une surface cylindrique externe possédant une partie conique de bout qui diminue vers le bas et une surface inférieure, et
d) au moins deux cavités (4, 8) communiquant directement avec au moins deux ouvertures formées dans la surface cylindrique et conique externe de l'organe d'ancrage pour permettre la croissance de tissu osseux nouvellement formé dans les cavités,
e) les ouvertures étant distribuées symétriquement autour de la périphérie de l'élément d'ancrage,
f) les arêtes (5, 10) formées par les cavités et la surface cylindrique externe formant des arêtes coupantes destinées à assure un autotaraudage lorsque l'élément d'ancrage est vissé dans le tissu osseux,
g) les cavités (4, 8) étant formées par des trous débouchants (4) ou des volumes (8) formés dans la surface cylindrique et s'étendant partiellement dans la partie conique de l'élément d'ancrage,
h) caractérisé en ce que les trous débouchants (4) ou les volumes relativement profonds (8) du matériau osseux, à part les ouvertures formées sur la surface cylindrique et conique externe de l'élément d'ancrage, sont fermés,
i) les ouvertures ont une section longitudinale comprenant deux bords rectilignes,
j) le volume total des cavités est adapté à la longueur de l'élément d'ancrage de manière que toutes les raclures de matière osseuse produites par l'autotaraudage sur la longueur de l'élément d'ancrage lorsque celui-ci est introduit dans l'os maxillaire soient recueillies et logées dans l'élément d'ancrage, et
k) la surface inférieure (6) de l'élément d'ancrage n'est pas discontinue et n'a pas d'ouvertures.

2. Elément d'ancrage selon la revendication 1, caractérisé en ce que lesdites cavités (4) sont formées par deux trous traversants mutuellement perpendiculaires, qui sont aussi perpendiculaires à l'axe longitudinal (7) de cet élément d'ancrage.

3. Elément d'ancrage selon la revendication 2, caractérisé en ce que les trous ont une section oblongue délimitée dans le sens longitudinal par des bords (5) rectilignes et parallèles, qui peuvent faire un certain angle avec l'axe longitudinal (7) de l'élément d'ancrage, mais qui sont avantageusement parallèles à cet axe longitudinal (7).

4. Elément d'ancrage selon la revendication 1, caractérisé en ce que chacun des volumes (8) pour matière osseuse est formé par une surface plane (11) de coupe, ayant un angle de coupe positif, et par une surface concave (12) de détalonnage, perpendiculaire à cette surface (11) de coupe.

5. Elément d'ancrage selon la revendication 4, caractérisé en ce que les cavités forment trois volumes (8) pour matière osseuse, répartis symétriquement.

6. Elément d'ancrage selon la revendication 5, caractérisé en ce que la profondeur des volumes (8) pour 1 matière osseuse dans le sens radial est égale à environ 50 à 80 % du rayon de cet élément d'ancrage.
